(19) Europäisches Patentamt / European Patent Office / Office européen des brevets

(11) **EP 2 325 462 A1**

(12) **DEMANDE DE BREVET EUROPEEN**

(43) Date de publication:
**25.05.2011 Bulletin 2011/21**

(51) Int Cl.:
*F02D 35/02* (2006.01)    *G01M 15/08* (2006.01)
*F02D 19/12* (2006.01)    *F02D 41/40* (2006.01)
*F02D 41/00* (2006.01)    *F02M 25/00* (2006.01)

(21) Numéro de dépôt: **10290562.7**

(22) Date de dépôt: **19.10.2010**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **13.11.2009 FR 0905462**

(71) Demandeur: **IFP Energies nouvelles
92852 Rueil-Malmaison Cedex (FR)**

(72) Inventeurs:
• **Duval, Laurent**
  **92000 Nanterre (FR)**
• **Pagot, Alexandre**
  **92500 Rueil Malmaison (FR)**
• **Thirouard, Benoist**
  **92500 Rueil Malmaison (FR)**
• **Zaccardi, Jean-Marc**
  **92500 Rueil Malmaison (FR)**

(54) **Procédé de détection de combustion anormale pour moteurs à combustion interne à partir de plusieurs indicateurs de la combustion**

(57)    - Procédé de détection de combustion anormale pour moteurs à combustion interne à allumage commandé, à partir de plusieurs indicateurs de la combustion.
- On détermine plusieurs indicateurs de la combustion, tels que le CA10 et la PMI, et l'on transforme ces indicateurs en nouveaux indicateurs (X2,Y2) ayant des dispersions plus faibles que celles des indicateurs non transformés pour des combustions normales. Puis, on détermine un paramètre caractérisant une distribution de N valeurs de ces nouveaux indicateurs de la combustion, acquises sur N cycles précédant le cycle en cours. On détecte alors le début d'une combustion anormale en comparant ce paramètre avec un seuil, et on contrôle le déroulement de la combustion anormale détectée dans la chambre de combustion.

**Figure 6**

EP 2 325 462 A1

**Description**

La présente invention concerne le domaine du contrôle de la phase de combustion d'un moteur à combustion interne. Notamment la présente invention se rapporte à une méthode pour détecter une combustion anormale, du type pré allumage à bas régime et à forte charge, dans une chambre de combustion d'un tel moteur.

Elle concerne plus particulièrement mais non exclusivement une telle méthode appliquée à un moteur à allumage commandé « downsizé », fonctionnant sous très fortes charges.

Les moteurs à allumage commandé ont l'avantage de limiter les émissions polluantes locales (HC, CO et $NO_x$) grâce à l'excellente adéquation entre le mode de fonctionnement (à richesse 1) et leur système de post-traitement simple et à bas coût. Malgré cet avantage fondamental, ces moteurs sont mal positionnés en termes d'émissions de gaz à effet de serre, car les moteurs Diesel qui leur font concurrence peuvent atteindre des émissions de $CO_2$ inférieures de 20 % en moyenne.

La combinaison du "downsizing" et de la suralimentation est une des solutions qui se répand de plus en plus pour abaisser la consommation des moteurs à allumage commandé. Malheureusement, le mécanisme classique de combustion dans ces moteurs peut être perturbé par des combustions anormales. Ce type de moteur comprend au moins un cylindre comportant une chambre de combustion délimitée par la paroi latérale interne du cylindre, par le haut du piston qui coulisse dans ce cylindre et par la culasse. Généralement, un mélange carburé est renfermé dans cette chambre de combustion et subit une étape de compression, puis une étape de combustion sous l'effet d'un allumage commandé, par une bougie. Ces étapes sont regroupées sous le vocable de « phase de combustion » dans la suite de la description.

Il a pu être constaté que ce mélange carburé peut subir différents types de combustion, et que ces types de combustion sont la source de différents niveaux de pression, ainsi que de contraintes mécaniques et/ou thermiques, dont certaines peuvent endommager gravement le moteur.

La première combustion, dite combustion conventionnelle ou combustion normale, est le résultat de la propagation de la combustion d'un mélange carburé comprimé lors d'une étape préalable de compression du moteur. Cette combustion se propage normalement selon un front de flamme à partir de l'étincelle générée à la bougie, et ne risque pas de détériorer le moteur.

Un autre type de combustion est une combustion avec cliquetis, qui résulte d'une auto-inflammation indésirable dans la chambre de combustion. Ainsi, après l'étape de compression du mélange carburé, la bougie est actionnée pour permettre l'allumage de ce mélange carburé. Sous l'effet de la pression générée par le piston, et de la chaleur dégagée par le début de la combustion du mélange carburé, il se produit une auto-inflammation brutale et localisée d'une partie du mélange carburé comprimé, avant que n'arrive le front de flamme issu de l'allumage du mélange carburé par la bougie. Ce mécanisme, dénommé cliquetis, conduit à une augmentation locale de la pression et de la température et peut engendrer, en cas de répétitions, des effets destructifs sur le moteur et principalement au niveau du piston.

Enfin, un autre type de combustion est une combustion anormale due à un pré-allumage du mélange carburé avant que la bougie n'initie l'allumage du mélange carburé présent dans la chambre de combustion.

Cette combustion anormale affecte en particulier les moteurs qui sont le résultat d'une opération de "miniaturisation", plus connu sous le terme anglais de "downsizing". Cette opération vise à diminuer la taille et/ou la cylindrée du moteur tout en conservant la même puissance et/ou le même couple que des moteurs conventionnels. Généralement, ce type de moteurs est principalement de type essence et est fortement suralimenté.

Il a pu être constaté que cette combustion anormale se réalise à fortes charges, et généralement lors des bas régimes de fonctionnement du moteur, lorsque le calage de la combustion du mélange carburé ne peut pas être l'optimum à cause du cliquetis. Compte tenu des fortes pressions et des températures élevées atteintes dans la chambre de combustion par la suralimentation, un démarrage de combustion anormale peut se produire, sporadiquement ou de façon continue, bien avant le moment où se réalise l'allumage du mélange carburé par la bougie. Cette combustion se caractérise par une première phase de propagation de flamme qui est calée trop tôt par rapport à celle d'une combustion conventionnelle. Cette phase de propagation peut être interrompue par une auto-inflammation qui va concerner une grande partie du mélange carburé présent dans la chambre de combustion, beaucoup plus grande que dans le cas du cliquetis.

Dans le cas où cette combustion anormale se produit de façon répétitive, de cycle-moteur à cycle-moteur, et se réalise à partir d'un point chaud du cylindre par exemple, celle-ci est dénommée "pré allumage". Si cette combustion se produit de manière violente, aléatoire et sporadique, elle est appelée "claquement" ou "rumble" (« pre-ignition »).

Cette dernière combustion anormale entraîne des niveaux de pressions très élevés (120 à 250 bars), ainsi qu'une augmentation des transferts thermiques qui peuvent entraîner une destruction partielle ou totale de l'équipage mobile du moteur, comme le piston ou la bielle. Ce type de pré allumage constitue actuellement une véritable limite à la miniaturisation ("downsizing") des moteurs à allumage commandé. Il s'agit d'un phénomène très complexe qui peut avoir de multiples origines. Plusieurs hypothèses ont été évoquées dans la littérature pour expliquer son apparition mais aucune d'entre elles n'a pour l'instant été clairement validée, il semble même plutôt que plusieurs de ces causes potentielles se manifestent simultanément et interagissent entre elles. Cette interaction, la violence du phénomène et son caractère stochastique rendent son analyse extrêmement compliquée. De plus, les différentes études sur le sujet se heurtent toutes au problème de l'identification même de ces combustions anormales. Il est en effet difficile de dire si un moteur est plus sensible qu'un autre au pré allumage tant qu'on est incapable de statuer sur la nature de chacune des combustions au sein d'un échantillon donné.

Une méthode permettant de détecter et quantifier ces combustions anormales est donc de première nécessité, car elle permet justement d'établir cette hiérarchie et d'identifier les pistes qui permettent d'améliorer la conception et les réglages des moteurs. Cette opération est particulièrement intéressante lors des développements de moteurs au banc moteur.

**État de la technique**

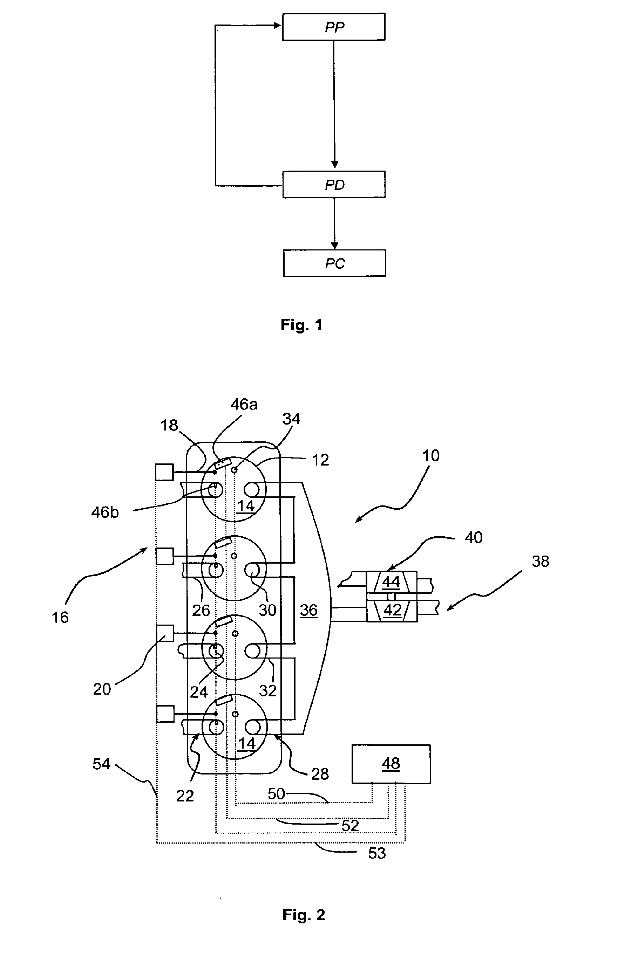

La méthodologie générale de traitement de ces combustions anormales est schématisée sur la figure 1, avec dans un premier temps une phase de prévention (PP) pour limiter au maximum les chances d'apparition du phénomène, puis une phase de détection (PD) lorsque la prévention n'a pas suffit à éviter le phénomène, pour déterminer si oui ou non il y a lieu d'intervenir dans le cycle même où le pré allumage a été détecté au moyen d'une phase corrective (PC).

La phase de détection comporte une phase d'acquisition de signaux, puis une phase de traitement de signaux permettant de détecter l'apparition du pré allumage à forte charge, de le caractériser et de le quantifier.

On connaît par la demande de brevet EP 1.828.737, une méthode pour détecter l'apparition du pré allumage à forte charge, de type *rumble.* Cette méthode est basée sur la mesure d'un signal relatif au déroulement de la combustion, et une comparaison avec un signal-seuil. La présence d'une combustion anormale, de type "rumble", dans la chambre de combustion, est détectée lorsque l'amplitude du signal dépasse de façon significative celle du signal-seuil. Selon cette méthode, le signal-seuil correspond à l'amplitude du signal produit lors d'une combustion avec cliquetis ou lors d'une combustion normale (conventionnelle)

Cependant, selon cette méthode, la détection ainsi réalisée ne permet pas d'agir au cours du cycle même de la détection. Les actions de corrections de ce type de pré allumage ne peuvent donc être réalisée qu'après la réalisation d'un tel phénomène, ce qui peut nuire sérieusement à l'intégrité du moteur.

On connaît également la méthode décrite dans le brevet FR 2.897.900. Selon cette méthode, on peut agir plus rapidement après la détection du pré allumage : on est capable d'agir au cours du même cycle que le cycle de détection du phénomène. Pour ce faire, le signal-seuil est préalablement calculé, c'est-à-dire avant le fonctionnement du moteur, puis stocké dans des tables de données du calculateur, appelées cartographies.

Cependant, l'utilisation de cartographies, ne permet pas de détecter à tout moment, c'est-à-dire en temps réel, le début d'un tel phénomène. De ce fait, il est toujours possible que la détection se fasse trop tardivement. De plus, aucune quantification de l'évolution du phénomène ne peut être réalisée. Ainsi, la nécessité ou non d'appliquer une phase de correction repose uniquement sur la comparaison de deux amplitudes à un instant donné. Or un tel phénomène peut très bien débuter, puis s'arrêter sans entraîner de dommage pour le moteur, et donc ne pas nécessiter de phase corrective.

Ainsi, l'objet de l'invention concerne un procédé alternatif permettant de détecter en temps réel l'apparition d'un phénomène de pré allumage à forte charge (du type *rumble*), de le caractériser et de le quantifier, avec les dispositifs et systèmes couramment utilisés dans les moteurs, de façon à prendre des mesures permettant de l'éviter dans la suite du fonctionnement du moteur, au cours du même cycle que celui de la détection. La méthode s'appuie sur une combinaison de plusieurs indicateurs caractéristiques de l'état d'avancement de la combustion, pour obtenir d'autres indicateurs permettant de distinguer plus rapidement et plus efficacement des combustions normales et des combustions anormales comme le pré allumage.

**Le procédé selon l'invention**

L'objet de l'invention concerne un procédé de contrôle de la combustion d'un moteur à combustion interne à allumage commandé, dans lequel on détecte une combustion anormale dans une chambre de combustion (14) d'au moins un cylindre (12) dudit moteur, on enregistre au moins un signal représentatif d'un état de la combustion au moyen d'au moins un capteur placé sur le moteur. Le procédé comporte les étapes pour chaque cycle moteur :

- on déduit du signal des indicateurs de la combustion ;

- on transforme les indicateurs en au moins un nouvel indicateur dont une distribution de N valeurs acquises sur N cycles précédant le cycle en cours possède, pour des combustions normales, une dispersion plus faible que celles des indicateurs non transformés ;

- on détecte le début d'une combustion anormale en comparant le nouvel indicateur avec un seuil préalablement défini ; et

- on contrôle le déroulement de la combustion anormale détectée dans la chambre de combustion.

Selon l'invention, on peut transformer les indicateurs au moyen d'une régression linéaire, le nouvel indicateur correspondant à un écart entre une valeur de l'indicateur non transformé réelle et une valeur d'indicateur estimée par régression linéaire. On peut également transformer les indicateurs au moyen d'une analyse en composantes principales, les nouveaux indicateurs correspondant à des composantes principales.

On peut définir le seuil à partir d'au moins un paramètre caractérisant la distribution de N valeurs du nouvel indicateur.

Selon un mode de réalisation, le signal est une mesure continue de pression au sein dudit cylindre. De façon préférentielle, au moins un indicateur est un angle vilebrequin où 10 % de l'énergie introduite a été dégagée.

On peut transformer les indicateurs en déterminant un nouvel indicateur qui explique une variabilité des indicateurs non transformés.

Enfin, selon l'invention, on peut déterminer le paramètre en s'affranchissant de valeurs extrêmes parmi les N valeurs.

## Présentation des figures

Les autres caractéristiques et avantages de l'invention apparaîtront à la lecture de la description donnée ci-après en se référant aux graphiques annexés où :

- la figure 1 montre la méthodologie générale de traitement des combustions anormales de type pré allumage.

- la figure 2 montre un moteur utilisant la méthode de détection selon l'invention.

- la figure 3 est un exemple d'évolution du délai d'initiation de la combustion sur une acquisition de 1000 cycles

- la figure 4 illustre le CA10 vs dérivée angulaire de la pression à CA = CA10

- la figure 5 illustre l'évolution de la grandeur "réduite" beta sur une acquisition de 1000 cycles

- la figure 6 illustre le CA10 vs dérivée angulaire de la pression à CA = CA10

- la figure 7 illustre Y2 en fonction de X2, la projection des cycles dans le repère obtenu à partir des directions principales identifiées dans le repère CA10, DP.

- la figure 8 illustre Y2 (en haut) et X2 (en bas) pour chaque échantillon

## Description détaillée du procédé

Sur la figure 2, un moteur à combustion interne 10 suralimenté à allumage commandé, en particulier de type essence, comprend au moins un cylindre 12 avec une chambre de combustion 14 à l'intérieur de laquelle se produit la combustion d'un mélange d'air suralimenté et de carburant.

Le cylindre comprend au moins un moyen d'alimentation en carburant sous pression 16, par exemple sous la forme d'un injecteur de carburant 18 contrôlé par une vanne 20, qui débouche dans la chambre de combustion, au moins un moyen d'admission d'air 22 avec une soupape 24 associée à une tubulure d'admission 26 se terminant par un plénum 26b (non représenté sur la figure), au moins un moyen d'échappement des gaz brûlés 28 avec une soupape 30 et une tubulure d'échappement 32 et au moins un moyen d'allumage 34, comme une bougie, qui permet de générer une ou plusieurs étincelles permettant d'enflammer le mélange carburé présent dans la chambre de combustion.

Les tubulures 32 des moyens d'échappement 28 de ce moteur sont raccordées à un collecteur d'échappement 36 lui-même connecté à une ligne d'échappement 38. Un dispositif de suralimentation 40, par exemple un turbocompresseur ou un compresseur volumétrique. Dans le cas d'un turbocompresseur, celui-ci est placé sur cette ligne d'échappement et comprend un étage d'entraînement 42 avec une turbine balayée par les gaz d'échappement circulant dans la ligne d'échappement et un étage de compression 44 qui permet de faire admettre un air d'admission sous pression dans les chambres de combustion 14 par les tubulures d'admission 26.

Le moteur comprend des moyens 46a de mesure de la pression cylindre, disposés au sein même du cylindre 12 du moteur. Ces moyens de mesure sont généralement constitués par un capteur de pression qui permet de générer un signal représentatif de l'évolution de la pression dans un cylindre.

Le moteur peut également comporter des moyens 46b de mesure de la pression d'admission, disposés dans le plénum 26b. Ces moyens de mesure sont généralement constitués par un capteur de pression absolue, de type piézoélectrique, qui permet de générer un signal représentatif de l'évolution de la pression d'admission dans le plénum d'admission.

Le moteur comprend également une unité de calcul et de commande 48, dénommée calculateur moteur, qui est reliée par des conducteurs (pour certains bidirectionnels) aux différents organes et capteurs du moteur de façon à pouvoir recevoir les différents signaux émis par ces capteurs, comme la température de l'eau ou la température de l'huile, pour les traiter par calcul et ensuite commander les organes de ce moteur pour assurer son bon fonctionnement.

Ainsi, dans le cas de l'exemple montré à la figure 2, les bougies 34 sont reliées par des conducteurs 50 au calculateur moteur 48 de façon à commander le moment de l'allumage du mélange carburé, le capteur de pression cylindre 46a est connecté par une ligne 52 à ce même calculateur moteur pour lui envoyer les signaux représentatifs de l'évolution de la pression dans le cylindre, et les vannes 20 de commande des injecteurs 18, sont raccordées par des conducteurs 54 au calculateur 48 pour commander l'injection de carburant dans les chambres de combustion. Les moyens 46b sont également connectés par une ligne 53 au calculateur moteur 48.

Au sein d'un tel moteur, le procédé selon l'invention permet de détecter l'apparition d'un phénomène de pré allumage à forte charge (du type *rumble*), de le caractériser et de le quantifier, en s'appuyant sur une caractérisation simultanée de valeurs de plusieurs indicateurs de combustion (CA10, PMI, ...).

L'idée principale de ce procédé est de combiner plusieurs indicateurs caractéristiques de l'état d'avancement de la combustion, pour obtenir d'autres indicateurs permettant de distinguer plus rapidement et plus efficacement des combustions normales et des combustions anormales comme le pré allumage.

| Indicateurs "directs" : $x_1, x_2, ...x_n$ | $\rightarrow$ | Indicateurs "réduits" : $X_1, X_2, ...X_n$ |
|---|---|---|

En choisissant judicieusement les indicateurs à combiner ($CA_{10}$, pression cylindre maximale, dérivée de la pression cylindre maximale,...), il est possible d'obtenir des indicateurs, dits "indicateurs réduits" et notés $X_1, X_2, ..., X_n$, qui présentent, dans le cas de combustions normales, des dispersions extrêmement plus faibles que les indicateurs directs $x_1, X_2, ..., X_n$. Il est ainsi possible de « gommer » la dispersion naturelle associée à la combustion, tout en conservant la même sensibilité au pré allumage.

Selon un exemple de réalisation, le procédé comporte les étapes suivantes :

1- on enregistre au moins un signal (pression dans le cylindre) représentatif de l'état de la combustion au moyen d'au moins un capteur placé dans le moteur, et on déduit de ce signal, ou de ces signaux, des indicateurs de la combustion à chaque cycle moteur, Puis, pour chaque cycle :

2- on construit au moins un nouvel indicateur expliquant au mieux la variabilité des indicateurs, en transformant lesdits indicateurs de combustion de façon à ce que les dispersions desdits nouveaux indicateurs dans le cas de combustions normales soient plus faibles que les dispersions desdits indicateurs non transformés;

3- on détermine au moins un paramètre caractérisant une distribution de N valeurs d'indicateurs combinés de la combustion acquises sur N cycles précédant le cycle en cours ;

4- on définit au moins un seuil pour lesdits indicateurs transformés au moyen desdits paramètres caractérisant ladite distribution ;

5- on détecte le début d'une combustion anormale en comparant l'indicateur transformé de la combustion avec ledit seuil, et on contrôle le déroulement de la combustion anormale détectée dans la chambre de combustion.

1. Détermination d'indicateur de la combustion à chaque cycle

On enregistre au moins un signal représentatif de l'état de la combustion, au moyen d'un capteur placé dans le moteur. Selon un mode de réalisation on choisit la pression cylindre. La mesure de la pression cylindre est réalisée à partir des moyens 46a de mesure de la pression cylindre. L'instrumentation des cylindres pour une mesure de pression est de plus en plus courante sur les véhicules.

L'invention permet d'utiliser d'autres mesures que la pression cylindre, telle que le couple instantané, le régime instantané, le niveau de vibrations (capteurs accélérométriques), signal d'ionisation,....

Puis, au cours de chaque cycle, on calcule des indicateurs de la combustion, à partir de ce signal. Selon un mode de réalisation on choisit le CA10 et la dérivée angulaire de la pression lorsque l'angle vilebrequin est égal à l'angle CA10. Le CA10 correspond à l'angle vilebrequin où 10 % de l'énergie introduite a été dégagée.

L'invention peut également utiliser d'autres indicateurs de combustion :

- à partir de la pression cylindre : PMI, pression cylindre maximale, angle vilebrequin à la pression maximale, CAxx, maximum de dégagement d'énergie,...

- à partir du couple instantané : maximum de couple, dérivée maximale de couple, ...

- à partir du régime instantané : maximum de vitesse, accélération maximale, ...

- le volume de la chambre de combustion, ou le gradient de volume à certains moments (au CA10 par exemple).

2- Construction de nouveaux indicateurs expliquant au mieux la variabilité des indicateurs directs

En choisissant judicieusement les indicateurs à combiner ($CA_{10}$, pression cylindre maximale, dérivée de la pression cylindre maximale,...), il est possible d'obtenir des indicateurs, dits "indicateurs réduits" et notés $X_1$, $X_2$, ..., $X_n$, qui présentent, dans le cas de combustions normales, des dispersions extrêmement plus faibles que les indicateurs directs $X_1$, $X_2$, ..., $X_n$. Il est ainsi possible de « gommer » la dispersion naturelle associée à la combustion, tout en conservant la même sensibilité au pré allumage.

On opère ainsi une réduction de dimension (un indicateur définit une dimension) pour exploiter au mieux les relations entre les différents indicateurs.

Pour réaliser cette réduction de dimension, on cherche les directions de l'espace ($x1$, $x2$, ..., $xn$) qui représentent le mieux les corrélations entre les différentes grandeurs. L'hypothèse qui motive cette approche est que les combustions anormales du type pré allumage ont un mode de combustion qui diffère sous certains aspects de celui suivi par une combustion normale. En d'autres termes, il y a une ou plusieurs caractéristiques de ces pré allumages qui présentent une discontinuité, permettant de les distinguer des autres combustions normales. En mettant en évidence les corrélations entre différents indicateurs on met plus facilement en évidence ces changements de modes de combustion.

Selon un premier mode de réalisation, on recherche les corrélations entre différents indicateurs au moyen d'une régression entre les indicateurs.

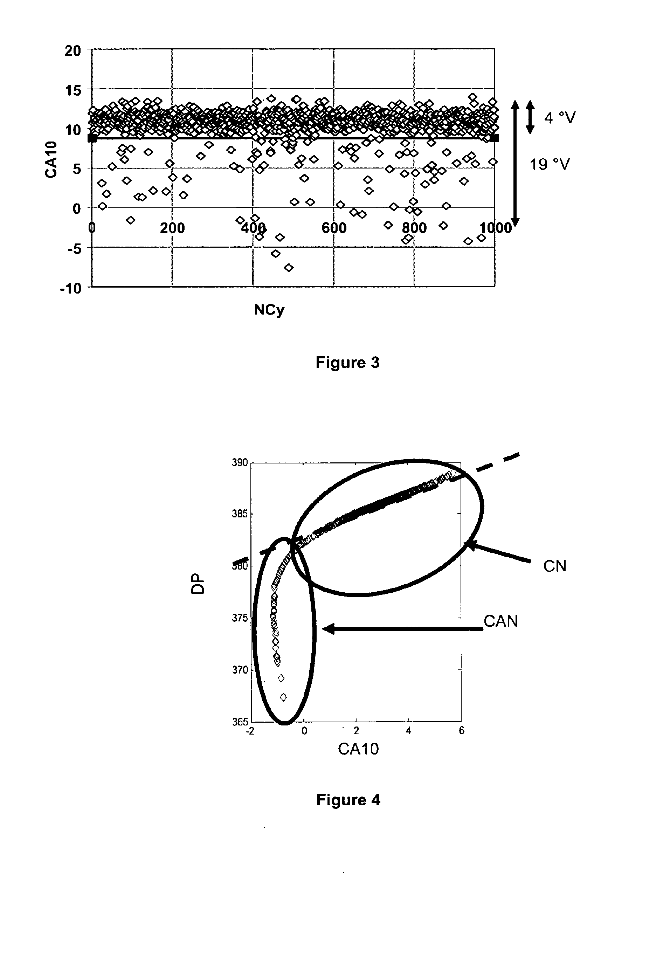

La figure 3 illustre l'évolution du CA10 lors d'une acquisition de 1000 cycles moteur en régime stabilisé. La dispersion associée aux combustions normales est de l'ordre de 4 °V. Nous pouvons aussi constater que les pré allumages s'éloignent de la moyenne des CA10 au maximum de l'ordre de 19 degrés vilebrequin (19 °V).

La figure 4 présente quant à elle ce même échantillon de points dans un plan CA10 / DP, où DP est la dérivée angulaire de la pression lorsque l'angle vilebrequin est égale à l'angle CA10. Cette représentation permet de constater qu'une relation linéaire lie ces deux variables dans le cas des combustions normales (CN), alors que les combustions anormales (CAN) s'éloignent très clairement de cette tendance. La droite en pointillé sur la figure 4 illustre la droite de régression linéaire entre les deux indicateurs de combustion CA10 et DP pour des combustions normales (CN). L'idée est donc de combiner ces deux indicateurs pour en extraire un troisième potentiellement plus intéressant pour discriminer plus facilement les combustions anormales des normales.

On peut par exemple utiliser comme troisième indicateur, indicateur transformé ou combiné, la variable β définie par l'erreur entre la régression et le CA10 :

$$\beta = CA10 - (\alpha.DP + \gamma)$$

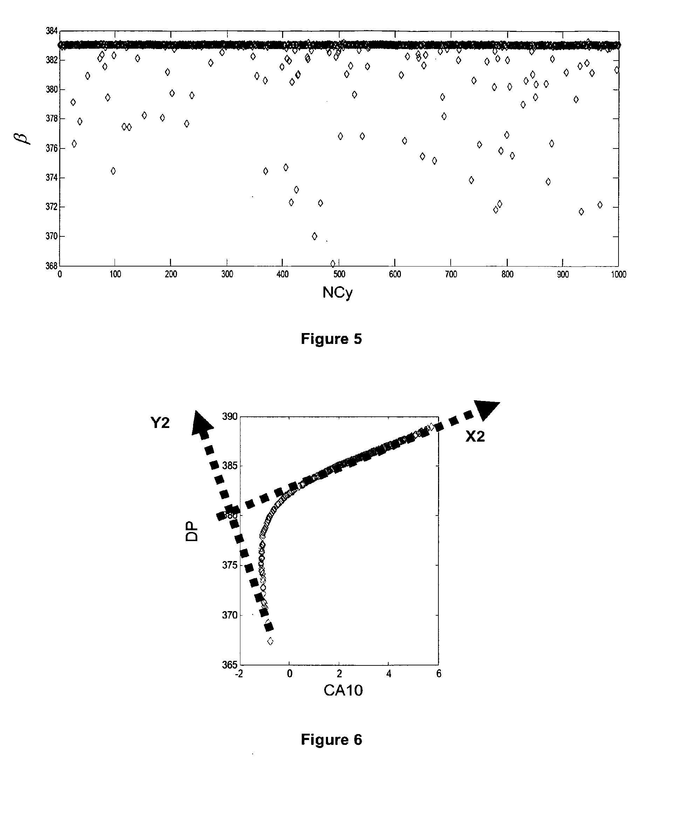

où ($\alpha.DP + y$) est la droite de régression linéaire entre CA10 et DP pour des combustions normales (CN). La figure 5 illustre l'évolution de la variable β pour les 1000 cycles moteur (NCy). On constate que la dispersion associée aux combustions normales est inférieure à 0.5 ° vilebrequin, alors que les pré allumages restent potentiellement toujours aussi éloignés de la moyenne des valeurs de β. Ce changement de variable permet donc de resserrer énormément la dispersion normale et d'identifier ainsi plus précisément les combustions anormales.

Selon un second mode de réalisation, on recherche les corrélations entre différents indicateurs au moyen d'une analyse en composantes principales, lesdits nouveaux indicateurs correspondants aux composantes principales. On transforme ainsi des indicateurs corrélés en nouveaux indicateurs, indépendants les uns des autres. Ces indicateurs transformés permettent d'expliquer au mieux la variabilité des indicateurs non transformés.

L'Analyse en Composantes Principales est une Analyse Factorielle de la famille de l'Analyse des données multivariées, qui consiste à transformer des variables liées entre elles (variables corrélées) en nouvelles variables indépendantes les unes des autres. Cette technique permet de réduire l'information en un nombre de composantes plus limité que le nombre initial de variables. Ces composantes permettant d'expliquer au mieux la variabilité (la variance) des données, c'est-à-dire de "capter" un maximum d'information.

Plusieurs degrés de liberté peuvent être utilisés pour optimiser le procédé :

- le nombre d'indicateurs utilisés ;

- le choix des indicateurs à utiliser ;

- la méthode de réduction utilisée pour identifier les corrélations entre les indicateurs retenus (ACP par exemple).

Les figures 6 à 8 permettent d'illustrer un exemple simple dans le cas du traitement de données acquises au banc moteur.

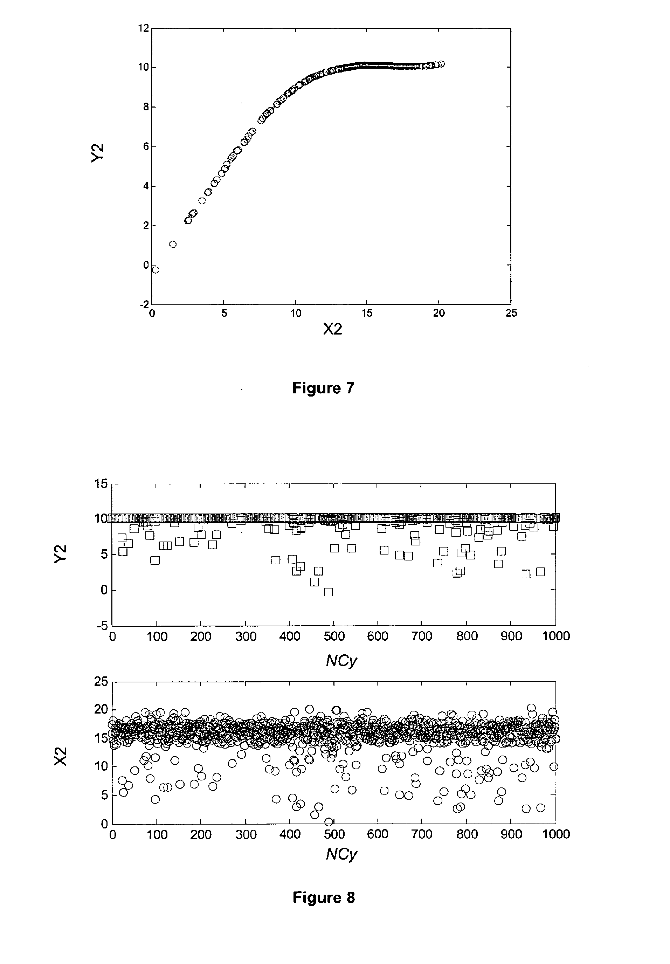

On effectue un changement de repère, en définissant par ACP deux nouveaux axes (composantes principales) X2 et Y2 (X2 étant "porté" par la zone linéaire et dense des combustions normales, et X2 et Y2 sont orthogonaux), représentés schématiquement sur la figure 6. La représentation du même échantillon de points dans le repère X2, Y2 est fournie sur la figure 7.

On analyse ensuite les composantes principales (axes) pour différencier les pré allumages des combustions normales.

3. Définition de seuils et détection de combustion avec pré allumage

En calculant ces nouveaux indicateurs sur N cycles précédant le cycle en cours, on obtient une distribution, de N valeurs d'indicateurs transformés, comme l'illustre la figure 5 pour l'indicateur β, et la figure 8 pour les indicateurs X2 et Y2.

De façon générale, on peut alors déterminer au moins un paramètre caractérisant une telle distribution : moyenne, moyenne robuste, écart type, écart type robuste, médiane,.... De façon avantageuse on peut déterminer ce paramètre en s'affranchissant, parmi lesdites N valeurs, des valeurs extrêmes.

Puis, on définit au moins un seuil pour ces indicateurs transformés au moyen des paramètres caractérisant la distribution : seuil sur la moyenne, seuil sur l'écart type...

Dans le cadre du premier mode de réalisation, où l'on recherche les corrélations entre différents indicateurs au moyen d'une régression entre les indicateurs, on peut calculer l'écart β entre le CA10 de chaque cycle et l'approximation linéaire. Par conséquent, dans le cas des combustions normales, cet écart β est faible, et il augmente dans le cas des combustions anormales.

En définissant un seuil sur la variable β, on peut très rapidement déterminer au cours d'un cycle si la combustion est normale ou non. La définition de ce seuil peut aisément être réalisée sur banc moteur.

Dans le cadre du second mode de réalisation, où l'on recherche les corrélations entre différents indicateurs au moyen d'une analyse en composante principale, on analyse les composantes principales.

Selon un exemple, on analyse la composante Y2 pour différencier les pré allumages des combustions anormales. L'évolution de cette composante est visible sur la figure 8 en haut. En bas, l'évolution de l'autre composante, X2, est illustrée. On peut y constater, comme sur la figure 5, que les pré allumages gardent la même "dynamique" par rapport aux combustions normales qui sont elles beaucoup plus resserrées.

Il est en revanche beaucoup plus simple et direct de définir un seuil de délimitation des combustions normales et du pré allumage, étant donné que les combustions normales sont toutes très resserrées.

On peut utiliser par exemple un seuil correspondant à la moyenne robuste, à laquelle on retire un fois l'écart type robuste.

4- Contrôle de la combustion anormale

Au moyen de cette comparaison avec un seuil, le calculateur moteur peut détecter le début d'une combustion anormale de type "rumble" ou du type "pré allumage" dans la chambre de combustion.

En cas de combustion anormale, ce calculateur lance ensuite les actions nécessaires au contrôle de cette combustion afin d'éviter la poursuite d'une telle combustion.

Par contrôle de la combustion anormale, il est entendu non seulement la possibilité de maîtriser le déroulement de cette combustion pour éviter les augmentations brutales de pressions destructrices mais aussi d'arrêter complètement une telle combustion, telle que par étouffement.

A titre préférentiel, ce contrôle de la combustion est réalisé par une réinjection de carburant à un angle de vilebrequin déterminé par les injecteurs 18. Plus précisément, le calculateur commande les vannes 20 de façon à ce que l'injecteur du cylindre concerné permette d'introduire dans la chambre de combustion une quantité de carburant sous forme liquide. La quantité de carburant réinjectée dépend de la constitution du moteur et peut aller de 10% à 200% de la quantité de carburant initialement introduite dans cette chambre de combustion. De ce fait, le carburant réinjecté sert à contrarier la flamme qui commence à se déployer lors de la combustion anormale. Cette réinjection permet soit de souffler cette flamme, soit d'étouffer cette flamme par augmentation de la richesse du mélange carburé. De plus, le carburant injecté sous forme liquide utilise la chaleur présente autour de cette flamme pour se vaporiser et les conditions de température autour de la flamme vont baisser en retardant la combustion du mélange carburé et surtout son auto-inflammation.

Après cette injection de carburant, la pression dans le cylindre augmente mais moins brutalement. Cette pression décroît ensuite pour atteindre un niveau compatible avec le niveau de pression d'une combustion conventionnelle.

Par ce mécanisme, tout développement d'une combustion anormale avec une grande vitesse de combustion et des pressions élevées est prohibé. Bien entendu, la mise en oeuvre des moyens pour contrôler la combustion anormale se fait à chaque cycle durant lequel une telle combustion est détectée par le calculateur.

Les actions du procédé telles que décrites ci-dessus peuvent être combinées à d'autres actions plus lentes, telles que la fermeture du papillon, pour empêcher que les conditions de pression de la chambre de combustion soient favorables à une combustion anormale dans les cycles qui suivent.

## Revendications

1. Procédé de contrôle de la combustion d'un moteur à combustion interne à allumage commandé, dans lequel on détecte une combustion anormale dans une chambre de combustion (14) d'au moins un cylindre (12) dudit moteur, on enregistre au moins un signal représentatif d'un état de la combustion au moyen d'au moins un capteur placé sur le moteur, **caractérisé en ce que**, pour chaque cycle moteur :

   - on déduit dudit signal des indicateurs de la combustion ;
   - on transforme lesdits indicateurs en au moins un nouvel indicateur dont une distribution de N valeurs acquises sur N cycles précédant le cycle en cours possède, pour des combustions normales, une dispersion plus faible que celles des indicateurs non transformés ;
   - on détecte le début d'une combustion anormale en comparant ledit nouvel indicateur avec un seuil préalablement défini ; et
   - on contrôle le déroulement de la combustion anormale détectée dans la chambre de combustion.

2. Méthode selon la revendication 1, dans laquelle on transforme lesdits indicateurs au moyen d'une régression linéaire, ledit nouvel indicateur correspondant à un écart entre une valeur de l'indicateur non transformé réelle et une valeur d'indicateur estimée par régression linéaire.

3. Méthode selon la revendication 1, dans laquelle on transforme lesdits indicateurs au moyen d'une analyse en composantes principales, lesdits nouveaux indicateurs correspondant à des composantes principales.

4. Procédé selon l'une des revendications précédentes, dans lequel on définit ledit seuil à partir d'au moins un paramètre caractérisant ladite distribution de N valeurs dudit nouvel indicateur.

5. Procédé selon l'une des revendications précédentes, dans lequel ledit signal est une mesure continue de pression au sein dudit cylindre.

6. Procédé selon l'une des revendications précédentes, dans lequel au moins un indicateur est un angle vilebrequin où 10 % de l'énergie introduite a été dégagée.

7. Procédé selon l'une des revendications précédentes, dans lequel on transforme lesdits indicateurs en déterminant un nouvel indicateur qui explique une variabilité desdits indicateurs non transformés.

**8.** Procédé selon l'une des revendications précédentes, dans lequel on détermine ledit paramètre en s'affranchissant de valeurs extrêmes parmi lesdites N valeurs.

**Fig. 1**

**Fig. 2**

**Figure 3**

**Figure 4**

**Figure 5**

**Figure 6**

**Figure 7**

**Figure 8**

Europäisches
Patentamt

European
Patent Office

Office européen
des brevets

**RAPPORT DE RECHERCHE EUROPEENNE**

Numéro de la demande

EP 10 29 0562

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2007/001064 A1 (TOYOTA MOTOR CO LTD [JP]; DENSO CORP [JP]; KANEKO RIHITO [JP]; KASASHI) 4 janvier 2007 (2007-01-04) | 1,3,4,7, 8 | INV. F02D35/02 G01M15/08 |
| Y | * alinéa [0078] - alinéa [0129]; figures * | 5,6 | |
| A | | 2 | ADD. |
| | ----- | | F02D19/12 |
| Y | US 2007/016387 A1 (TAKEMURA YUICHI [JP] ET AL) 18 janvier 2007 (2007-01-18) | 5,6 | F02D41/40 F02D41/00 |
| A | * alinéa [0029] - alinéa [0060]; revendication 1; figures * | 1-4,7,8 | F02M25/00 |
| | ----- | | |
| Y | DE 10 2004 033072 A1 (BOSCH GMBH ROBERT [DE]) 28 juillet 2005 (2005-07-28) * alinéa [0038]; figures * | 5,6 | |
| | ----- | | |
| A | FR 2 897 900 A1 (INST FRANCAIS DU PETROLE [FR]) 31 août 2007 (2007-08-31) * le document en entier * | 5,6 | |
| | ----- | | |
| A | US 2002/179053 A1 (KOKUBO NAOKI [JP] ET AL) 5 décembre 2002 (2002-12-05) * alinéas [0074], [0100] - [0117]; figures * | 1-4,7,8 | DOMAINES TECHNIQUES RECHERCHES (IPC) |
| | ----- | | F02D |
| A | DE 40 15 992 A1 (FEV MOTORENTECH GMBH & CO KG [DE]) 21 novembre 1991 (1991-11-21) * le document en entier * | 1-8 | G01M |
| | ----- | | |

Le présent rapport a été établi pour toutes les revendications

| Lieu de la recherche | Date d'achèvement de la recherche | Examinateur |
|---|---|---|
| Munich | 31 janvier 2011 | Aign, Torsten |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 29 0562

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-01-2011

| Document brevet cité au rapport de recherche | | Date de publication | Membre(s) de la famille de brevet(s) | | Date de publication |
|---|---|---|---|---|---|
| WO 2007001064 | A1 | 04-01-2007 | AR | 053942 A1 | 23-05-2007 |
| | | | CN | 101213432 A | 02-07-2008 |
| | | | EP | 1896817 A1 | 12-03-2008 |
| | | | JP | 4452660 B2 | 21-04-2010 |
| | | | JP | 2007009725 A | 18-01-2007 |
| | | | KR | 20080031905 A | 11-04-2008 |
| | | | US | 2008234918 A1 | 25-09-2008 |
| | | | US | 2007084266 A1 | 19-04-2007 |
| | | | ZA | 200800720 A | 31-12-2008 |
| | | | ZA | 200800722 A | 28-01-2009 |
| US 2007016387 | A1 | 18-01-2007 | CN | 101019013 A | 15-08-2007 |
| | | | EP | 1938072 A1 | 02-07-2008 |
| | | | JP | 4459125 B2 | 28-04-2010 |
| | | | JP | 2007023903 A | 01-02-2007 |
| | | | WO | 2007010958 A1 | 25-01-2007 |
| DE 102004033072 | A1 | 28-07-2005 | FR | 2864839 A1 | 08-07-2005 |
| | | | US | 2005145219 A1 | 07-07-2005 |
| FR 2897900 | A1 | 31-08-2007 | CN | 101037970 A | 19-09-2007 |
| | | | EP | 1826379 A1 | 29-08-2007 |
| | | | JP | 2007231948 A | 13-09-2007 |
| | | | US | 2008035129 A1 | 14-02-2008 |
| US 2002179053 | A1 | 05-12-2002 | AUCUN | | |
| DE 4015992 | A1 | 21-11-1991 | AUCUN | | |

EPO FORM P0460

Pour tout renseignement concernant cette annexe : voir Journal Officiel de l'Office européen des brevets, No.12/82

**EP 2 325 462 A1**

**RÉFÉRENCES CITÉES DANS LA DESCRIPTION**

**Documents brevets cités dans la description**

- EP 1828737 A
- FR 2897900